# EUROPÄISCHE PATENTSCHRIFT

(11) **EP 0 688 976 B1**
(45) Veröffentlichungstag und Bekanntmachung des Hinweises auf die Patenterteilung: **29.01.1997**
(21) Anmeldenummer: 95109008.3
(22) Anmeldetag: 12.06.1995
(51) Int. Cl.: F16H 57/08

(54) **Planetenradträger**
Planet-carrier
Porte-satellites

(30) Priorität: 23.06.1994 DE 4421931
(43) Veröffentlichungstag der Anmeldung: 27.12.1995
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Premiski, Vladimir, D-53909 Zülpich-Bürvenich (DE); Brassai, Zoltan, D-51467 Bergisch-Gladbach (DE); Silk, Mark, D-50767 Köln (DE); Wehren, Wilhelm, D-50171 Kerpen/Blatzheim (DE)
(74) Vertreter: Messulam, Alec Moses

(56) Entgegenhaltungen:
- CH-A- 415 215
- GB-A- 2 232 454

## Beschreibung

Die Erfindung bezieht sich auf einen Planetenradträger bestehend aus zwei miteinander axial verbundenen Trägerbauteilen, von denen zumindest eines mit sich axial erstreckenden Stegen und von denen zumindest das andere mit den Stegen entsprechenden Aufnahmen versehen ist und wobei die Stege in den Aufnahmen formschlüssig eingreifen und zusätzlich miteinander verbunden werden.

Aus der DE-OS 25 03 518 ist ein Planetenradträger aus Blechteilen der den Oberbegriff des Patentanspruches 1 bildenden Art bekannt.

Der bekannte Planetenradträger weist den Nachteil auf, daß beide Trägerbauteile nur von Blechteilen gebildet werden, wodurch sich z.B. für den Querschnitt der Stege erhebliche Einschränkungen ergeben, die einen Einsatz eines solchen Planetenradträgers unter besonders hohen Belastungen nicht mehr möglich machen.

Aus der DE-PS 26 05 230 ist ein Planetenradträger bekannt, bei dem die beiden miteinander axial verbundenen Trägerbauteile als Gußteile oder als Schmiedeteile hergestellt sind, so daß für die Gestaltung der Querschnitte der Stege eine größere Gestaltungsfreiheit gegeben ist. Damit kann ein solcher Planetenradträger auch für hochbelastete Planetenradsätze Verwendung finden.

Der bekannte Planetenradträger weist jedoch den Nachteil auf, daß auch hier wieder die Stege 12 im wesentlichen einen kreisbogenförmig verlaufenden Rechteckquerschnitt aufweisen, der in radialer Richtung nicht so hoch belastbar ist.

Aus der DE-PS 36 03 401 ist ein Planetenradträger bestehend aus zwei miteinander axial verbundenen Trägerbauteilen bekannt, wobei die Trägerbauteile als Schmiedeteile hergestellt werden und wo auch die Stege einen im wesentlichen dreieckförmigen Querschnitt aufweisen, der sowohl in Umfangsrichtung als auch in Radialrichtung erhebliche Kräfte übertragen kann. Der Querschnitt der Stege wird hierbei jedoch durch Axialbohrungen geschwächt, die zur Aufnahme von Verbindungsbolzen zwischen den beiden Trägerbauteilen vorgesehen sind.

Das Ziel der Erfindung ist es, einen Planetenradträger der im Oberbegriff des Patentanspruches 1 aufgezeigten Art derart zu verbessern, daß er bei geringem Bauvolumen sehr hoch belastbar ist.

Gemäß der Erfindung wird dieses Ziel erreicht, indem ein Planetenradträger gemäß dem Oberbegriff des Patentanspruches 1 die im Kennzeichenteil des Patentanspruches 1 aufgezeigten Merkmale aufweist.

In den Ansprüchen 2 und 3 sind weitere zweckmäßige Ausgestaltungen der Erfindung erläutert.

Die Erfindung wird anhand eines in den Zeichnungen gezeigten Ausführungsbeispieles näher erläutert. Es zeigt:
- Fig. 1: eine Axialansicht eines Planetenradträger gemäß der Erfindung von einer Seite;
- Fig. 2: eine Axialansicht des Planetenradträgers in Fig. 1 von der anderen Seite;
- Fig. 3: einen Schnitt entlang der Linie III-III in Fig. 1;
- Fig. 4: einen Schnitt entlang der Linie IV-IV in Fig. 3;
- Fig. 5: eine vergrößerte Ansicht der Verbindung im Kreis V in Fig. 3 und
- Fig. 6: einen Schnitt entlang der Linie VI-VI in Fig. 5.

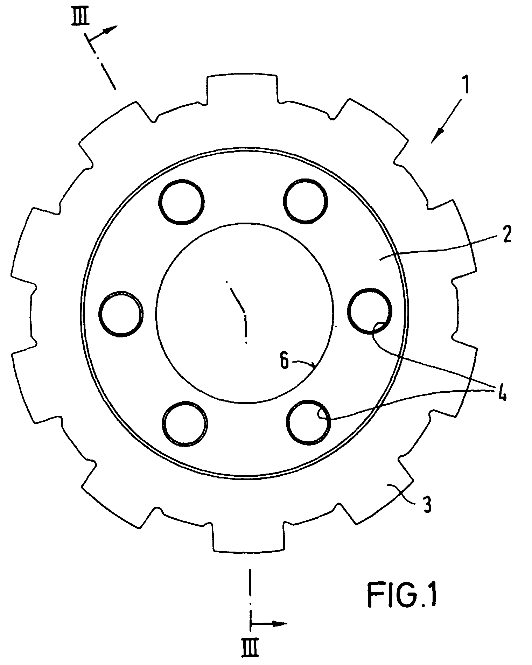

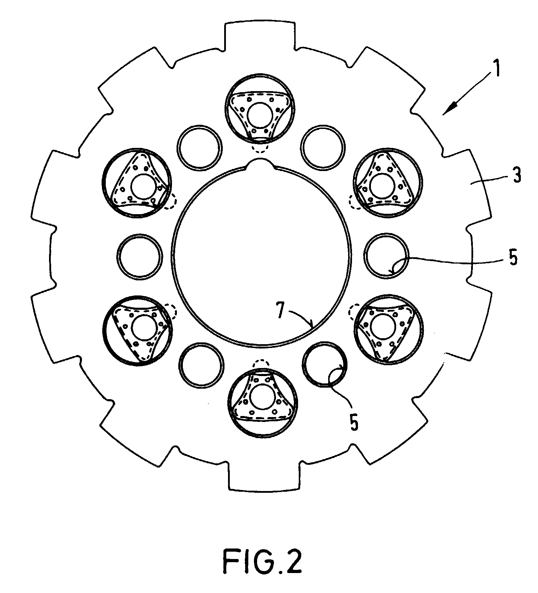

Der aus den Figuren 1 bis 3 ersichtliche Planetenradträger 1 besteht im wesentlichen aus zwei miteinander axial verbundenen Trägerbauteilen 2 und 3, von denen das eine Trägerbauteil 2 z.B. als ein Feinschmiedeteil und das andere Trägerbauteil 3 als ein Sinterbauteil ausgebildet ist.

Das Trägerbauteil 2 wie auch das Trägerbauteil 3 sind in üblicher Weise mit Aufnahmebohrungen 4 bzw. 5 für Planetenradbolzen (nicht gezeigt) versehen, auf denen die Planetenräder in herkömmlicher Weise über Nadellager drehbar gelagert und über seitliche Anlaufscheiben abgestützt werden.

Das Trägerbauteil 2 und das Trägerbauteil 3 weisen darüber hinaus die üblichen Mittelbohrungen 6 und 7 auf, die zum Durchtritt von Getriebewellen (nicht gezeigt) vorhanden sein müssen.

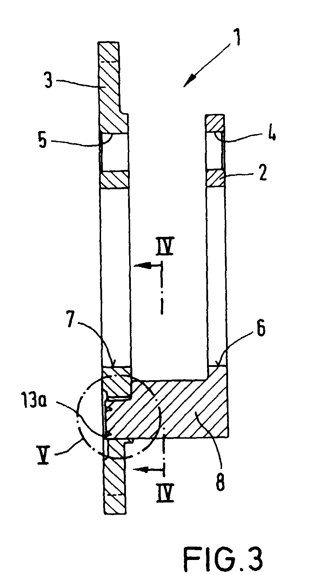

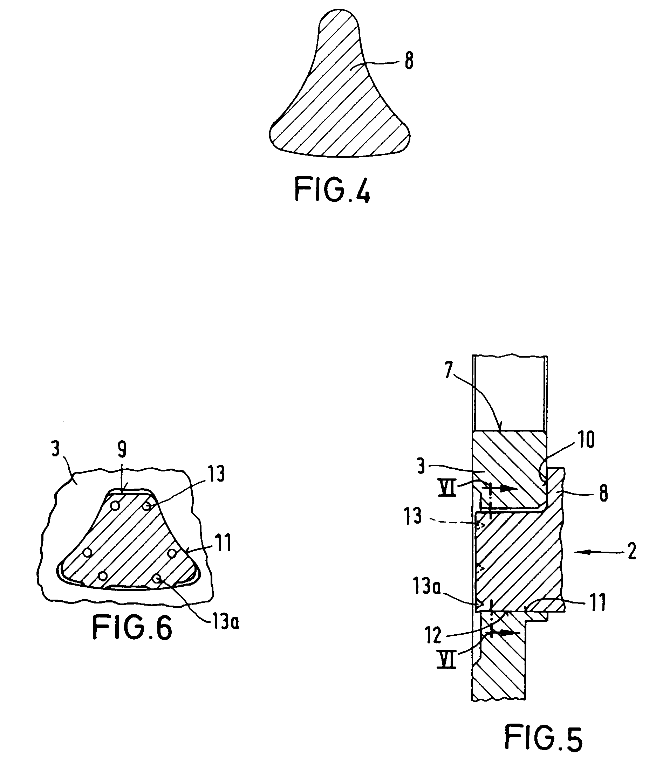

Die erfindungsgemäße Verbindung der beiden Trägerbauteile 2 und 3, wie sie in dem in Fig. 3 in Strich-Punkt-Linien gezeichneten Kreisen V hervorgehoben ist, wird in Zusammenhang mit den Figuren 4 bis 6, in denen diese Verbindung vergrößert dargestellt ist, näher erläutert.

Wie aus Fig. 3 noch ersichtlich ist, ist das Trägerbauteil 6 mit einer Vielzahl von Stegen 8 versehen, deren Querschnitt, wie aus Fig. 4 ersichtlich ist, im wesentlichen eine Dreieckform aufweist, deren Seiten durch Kreisbögen und deren Ecken durch Abrundungen gebildet sind, wobei sich die Kreisbögen nach den unterzubringenden Planetenrädern richten.

Die Stege 8 mit ihrer Dreieckform sind, wie aus den Figuren 5 und 6 ersichtlich, durch einen Kreisbogen 9 angeschnitten und weisen so eine Stufe 10 auf, durch die der genaue Abstand zwischen den beiden Trägerbauteilen 2 und 3 festgelegt wird.

Die verbleibende beschnittene Dreieckform 11 an den Stegen 8 des Trägerbauteiles 2 entspricht im wesentlichen einer formgleichen Ausnehmung 12 im Trägerbauteil 3.

Die angeschnittene Dreieckform 11 weist hierbei gegenüber der Ausnehmung 12 an bestimmten Stellen ein Übermaß auf, so daß eine Verbindung nur mit einer strammen Preßpassung möglich ist.

Dadurch, daß der eine Trägerbauteil 2 als Feinschmiedeteil hergestellt wird und der andere Trägerbauteil 3 als Sinterbauteil hergestellt wird, kann diese Preßpassung ohne mechanische Nachbearbeitung bereitgestellt werden.

Zusätzlich zu dieser strammen Preßpassung zwischen den beiden Trägerbauteilen 2 und 3 kann der überstehende Bereich der beschnittenen Dreieckform 11 durch Verstemmen bei 13 + 13a zusätzlich gesichert werden.

Durch das Vermeiden von Schweißverbindungen im Bereich der Trägerbauteile wird ein Wärmeverzug und eventuelle Spannungskonzentrationen vermieden.

Der von keinen Axialbohrungen geschwächte dreieckige Querschnitt sowohl der Stege 8 als auch des Verbindungsbereiches 11 sorgt für eine zuverlässige, formschlüssige Verbindung zwischen den beiden Trägerbauteilen 2 und 3 und eine optimale Kraftübertragung sowohl in Umfangsrichtung als auch in Radialrichtung.

## Patentansprüche

1. Planetenradträger (1) bestehend aus zwei miteinander axial verbundenen Trägerbauteilen (2 und 3) von denen zumindest eines mit sich axial erstreckenden Stegen (8) und von denen zumindest das andere mit den Stegen (8) entsprechenden Aufnahmen (12) versehen ist und wobei die Stege (8) in den Aufnahmen (12) formschlüssig eingreifen und zusätzlich miteinander verbunden werden,
**dadurch gekennzeichnet**, daß
- die sich am einen Trägerbauteil (2) axial erstrekkenden Stege (8) im wesentlichen eine Dreieckform aufweist, deren Seiten durch Kreisbögen und deren Ecken durch Abrundungen gebildet sind, wobei sich die Kreisbögen nach den unterzubringenden Planetenrädern richten,
- die Stege (8) an ihren den Aufnahmen (12) zugewandten Enden mit einer Stufe (10) von etwa der Dicke des anderen Trägerbauteiles (3) im Bereich der Aufnahmen (12) entsprechenden Höhe aufweist,
- die im anderen Trägerbauteil (3) ausgebildeten Aufnahmen (12) eine der durch die Stufe (10) angeschnittenen Stegen (8) etwa entsprechende, angeschnittene Dreiecksform (11) aufweisen und
- die angeschnittene Dreiecksform (11) der Stege (8) mit den Aufnahmen (12) durch eine Preßpassung miteinander verbindbar sind.

2. Planetenradträger nach Anspruch 1,
**dadurch gekennzeichnet**, daß
- der eine Trägerbauteil (2) als ein Feinschmiedeteil und der andere Trägerbauteil (3) als ein Sinterbauteil ausgebildet ist und die Preßpassung zwischen der angeschnittenen Dreiecksform (11) und den Aufnahmen (12) ohne mechanische Nachbearbeitung bereitgestellt wird.

3. Planetenradträger nach einem der Ansprüche 1 und 2,
**dadurch gekennzeichnet**, daß
- die Preßpassung zwischen den angeschnittenen Dreiecksformen (11) und den Aufnahmen (12) der beiden Trägerbauteile (2 und 3) durch darauffolgendes Verstemmen (bei 13 und 13a) der freien Enden der angeschnittenen Dreieckform (11) gesichert wird.

## Claims

1. A planet carrier (1) comprising two carrier parts (2 and 3), connected together axially, at least one of which is provided with axially extending posts (8) and at least the other with fitting openings (12) corresponding to the posts (8), wherein the posts (8) engage in the openings (12) in a form-fitting manner and the carrier parts are additionally connected together, characterised in that
- the axially extending posts (8) on the one carrier part (2) have a triangular cross-section have a substantially triangular shape, their sides being in the form of circular arcs and their corners being rounded off, with the arcs directed towards the planets to be accommodated;
- the posts (8) are provided at their ends facing the fitting openings (12) with a step (10) of height substantially corresponding to the thickness of the other carrier part (3) in the region of the openings (12);
- the fitting openings (12) formed in the other carrier part (3) have a cut-back triangular shape (11) substantially corresponding to the posts (8) as cut back by the step (10); and
- the cut-back triangular shape (11) of the posts (8) is adapted to be connected to the openings (12) by a force fit.

2. A planet carrier according to claim 1,
characterised in that
- the one carrier part (2) is formed as a precision forging and the other carrier part (3) by sintering, and the force fit between the cut-back triangular shape (11) and the openings (12) is provided for without further mechanical working.

3. A planet carrier according to one of claims 1 and 2,
characterised in that
- the force fit between the cut-back triangular shapes (11) and the openings (12) in the two carrier parts (2 and 3) is secured by subsequent caulking (at 13 and 13a) of the free ends of the cut-back triangular shape (11).

## Revendications

1. Porte-pignons satellites (1) comprenant deux pièces de support (2 et 3) axialement reliées entre elles dont l'une au moins est pourvue d'entretoises (8) orientées axialement et dont au moins l'autre est pourvue de logements (12) correspondant aux entretoises (8), et sur lequel les entretoises (8) pénètrent à complémentarité de formes dans les logements (12) et sont en outre reliées entre elles, caractérisé en ce que
- les entretoises (8), s'étendant axialement à partir d'une pièce de support (2), possèdent une section essentiellement triangulaire dont les côtés sont formés par des arcs de cercle et les angles sont formés par des arrondis, les arcs de cercle dépendant des pignons satellites à monter,
- les entretoises (8) présentent, à leurs extrémités dirigées vers les logements (12), un gradin (10) dont la hauteur correspond à peu près à l'épaisseur de l'autre pièce de support (3) dans la zone des logements (12),
- les logements (12), ménagés dans l'autre pièce de support (3), possèdent une forme triangulaire coupée (11) correspondant à peu près à la forme, coupée par le gradin (10), des entretoises (8) et
- la forme triangulaire coupée (11) des entretoises (8) et les logements (12) peuvent être réunis par un assemblage à ajustement serré.

2. Porte-pignons satellites selon la revendication 1, caractérisé en ce qu'une pièce de support (2) est une pièce obtenue par forgeage fin et l'autre pièce de support (3) est une pièce frittée, et l'ajustement serré entre la forme triangulaire coupée (11) et les logements (12) est obtenue sans post-usinage mécanique.

3. Porte-pignons satellites selon la revendication 1 ou 2, caractérisé en ce que l'ajustement serré entre les formes triangulaires coupées (11) et les logements (12) des deux pièces de support (2 et 3) est bloqué par matage consécutif (en 13 et 13a) des extrémités libres de la forme triangulaire coupée (11).
